# EUROPEAN PATENT APPLICATION

(11) **EP 3 466 985 A1**
(43) Date of publication of application: **10.04.2019**
(21) Application number: 17802431.1
(22) Date of filing: 29.03.2017
(51) Int. Cl.: C08C 19/00, C08F 4/54, C08F 4/606

(54) **TERMINALLY MODIFIED CONJUGATED DIENE POLYMER, RUBBER COMPOSITION, RUBBER PRODUCT, AND METHOD FOR PRODUCING TERMINALLY MODIFIED CONJUGATED DIENE POLYMER**

(30) Priority: 24.05.2016 JP 2016103207
(71) Applicant: Bridgestone Corporation, Tokyo 104-8340 (JP)
(72) Inventor: YAMAGATA Yusuke, Tokyo 104-8340 (JP); KAITA Shojiro, Tokyo 104-8340 (JP); TAKANO Shigenaga, Tokyo 104-8340 (JP)
(74) Representative: Lang, Johannes
(86) International application number: PCT/JP2017/013101
(87) International publication number: WO 2017/203830

(57) **Abstract**

An object of the present disclosure is to provide a terminal-modified conjugated diene polymer having a high cis-1,4 content and a low molecular weight distribution value and being excellent in durability (such as wear resistance, fracture resistance, cracking resistance, and the like). In order to achieve the object, a terminal-modified conjugated diene polymer of the present disclosure characteristically has: molecular weight distribution determined by gel permeation chromatography (GPC) of less than 2; and content of cis-1,4 bond of 95 % or more.

## Description

### TECHNICAL FIELD

The present invention relates to a terminal-modified conjugated diene polymer, a rubber composition, a rubber product, and a method for manufacturing a terminal-modified conjugated diene polymer.

### BACKGROUND ART

In recent years, there has been a strong demand for a tire having high durability such as high wear resistance and high cracking resistance due to the increasing social request for low-fuel consumption automobiles in view of energy and resource saving. Examples of the known technique for improving durability of a tire include controlling in terms of stereoregularity the microstructure of a rubber component blended in the tire.

It is known that content of the cis-1,4 bond is 99.7 % in the microstructure of natural rubber. Such a high degree of stereoregularity presumably contributes to good elongation crystallinity of natural rubber. A rubber composition using natural rubber, when it is used for a tire, can realize high durability because of the good elongation crystallinity of natural rubber. It is also known that durability of a tire using polybutadiene can be enhanced by controlling the microstructure of polybutadiene in terms of stereoregularity.

In this connection, PTL 1 discloses that it is possible to synthesize a terminal-modified butadiene polymer having a high cis-1,4 content by using a catalyst system in which conjugated diene monomer is added to a neodymium compound. Further, PTL 2 discloses a technique for manufacturing a modified conjugated diene polymer having a high cis-1,4 content in a conjugated diene part thereof and a modification rate equal to or larger than a specific value by: preparing polymer having an active organic metal site through polymerization of a conjugated diene compound in an organic solvent by using a catalyst including a compound containing a rare earth element of the lanthanide series; and modifying the polymer with a specific modifying agent.

### CITATION LIST

### Patent Literature

PTL 1: JP 2000-86719
PTL 2: WO2006/112450

### SUMMARY

However, although the techniques of PTL land PTL 2 can each realize a high cis-1,4 content, they still have room for improvement in reducing the value of molecular weight distribution of a conjugated diene polymer, in order to further improve fuel consumption of a resulting product. Further, in this connection, there has been a demand for developing a modified conjugated diene polymer which reliably has a high cis-1,4 content and a low molecular weight distribution value even when the conjugated diene polymer thereof has been modified.

In view of this. an object of the present disclosure is to provide a terminal-modified conjugated diene polymer having a high cis-1,4 content and a low molecular weight distribution value and being excellent in durability (such as wear resistance, fracture resistance, cracking resistance, and the like), as well as a method for manufacturing the terminal-modified conjugated diene polymer. Another object of the present disclosure is to provide a rubber composition and a rubber product, each of which has high durability, by using the terminal-modified conjugated diene polymer.

The present disclosure has been contrived to achieve the aforementioned objects and the primary features thereof are as follows.
A terminal-modified conjugated diene polymer of the present disclosure is characterized in that it has: molecular weight distribution determined by gel permeation chromatography (GPC) of less than 2; and content of cis-1,4 bond of 95 % or more. According to this feature, it is possible to obtain a terminal-modified conjugated diene polymer having a high cis-1,4 content and a low molecular weight distribution value and being excellent in durability.

Further, it is preferable that the terminal-modified conjugated diene polymer of the present disclosure has a modification rate equal to or larger than 70 %. According to this feature, it is possible to more efficiently obtain an effect resulting from the terminal modification.

Yet further, it is preferable that the terminal-modified conjugated diene polymer of the present disclosure has the molecular weight distribution of 1.7 or less. According to this feature, it is possible to further improve fuel consumption of a resulting product.

Yet further, in the terminal-modified conjugated diene polymer of the present disclosure, conjugated diene polymer constituting the terminal-modified conjugated diene polymer is preferably polybutadiene or polyisoprene. According to this feature, it is possible to further ensure obtaining a terminal-modified conjugated diene polymer having a high cis-1,4 content and a low molecular weight distribution value.

Yet further, it is preferable that the terminal-modified conjugated diene polymer of the present disclosure is a reaction product of polymerization of a conjugated diene compound by using a polymerization catalyst composition and subsequent modification of a terminal of a polymer prepared by the polymerization, wherein the polymerization catalyst composition contains: a rare earth element compound; a coordinative compound having a cyclopentadiene skeleton selected from the group consisting of substituted/non-substituted cyclopentadiene, substituted/non-substituted indene, and substituted/non-substituted fluorene; an ionic compound constituted of a non-coordinating anion and a cation; and aluminoxane. According to this feature, it is possible to further ensure obtaining a terminal-modified conjugated diene polymer having a high cis-1,4 content and a low molecular weight distribution value.

A rubber composition of the present disclosure is characterized in that it includes the aforementioned terminal-modified conjugated diene polymer.
According to this feature, the rubber composition can have excellently high durability.

A rubber product of the present disclosure is characterized in that it uses the aforementioned rubber composition.
According to this feature, the rubber product can have excellently high durability.

According to the present disclosure, it is possible to provide a terminal-modified conjugated diene polymer having a high cis-1,4 content and a low molecular weight distribution value and being excellent in durability (such as wear resistance, fracture resistance, cracking resistance, and the like), as well as a method for manufacturing the terminal-modified conjugated diene polymer.
Further, according to the present disclosure, it is possible to provide a rubber composition and a rubber product, each of which has high durability, by using the aforementioned terminal-modified conjugated diene polymer.

### DETAILED DESCRIPTION

### < Terminal-modified conjugated diene polymer >

A terminal-modified conjugated diene polymer of the present disclosure will be described in detail by an embodiment thereof hereinafter.
The terminal-modified conjugated diene polymer of the present disclosure is characterized in that: it is a polymer obtained by preparing a polymer/copolymer thorough polymerization of a conjugated diene compound (e.g. 1,3-butadiene, isoprene) as a monomer and modifying a terminal of the polymer/copolymer; it has molecular weight distribution determined by gel permeation chromatography (GPC) of less than 2; and it has content of cis-1,4 bond of 95 % or more.

The content of cis-1,4 bond of the terminal-modified conjugated diene polymer of the present disclosure must be 95 % or more in terms of realizing high durability and is preferably 98 % or more, more preferably 98.5 % or more.
When the cis-1,4 bonding content is 95 % or more, orientation of the polymer chains and expression of elongation crystallinity are satisfactory, whereby a high level of elongation crystallinity required for realizing excellently high durability is ensured.

The molecular weight distribution of the terminal-modified conjugated diene polymer of the present disclosure, determined by gel permeation chromatography (GPC), must be of less than 2 in terms of improving low-fuel consumption property of a resulting product and is preferably of 1.7 or less, more preferably 1.65 or less.
The molecular weight distribution represents Mw (weight average molecular weight)/Mn (number average molecular weight) in the present disclosure. Conditions of the GPC measurement are not particularly restricted as long as they ensure accurate measurement of the aforementioned molecular weight distribution.

Content of cis-1,2 vinyl bond of the terminal-modified conjugated diene polymer is preferably 2 % or less, more preferably 1 % or less.
Setting the 1,2-vinyl bonding content to be 2 % or less reduces the possibility that the elongation crystallinity of the polymer is adversely affected.

The weight average molecular weight (Mw) of the terminal-modified conjugated diene polymer is preferably ≥ 300,000, more preferably ≥ 400,000 in terms of realizing high durability.

A conjugated diene polymer as the precursor of the terminal-modified conjugated diene polymer of the present disclosure is preferably polybutadiene or polyisoprene because they ensure obtaining such a cis-1,4 content and a molecular weight distribution as described above.

Type of a modifying group of the terminal-modified conjugated diene polymer of the present disclosure is not particularly restricted and may be appropriately selected in accordance with applications of the terminal-modified conjugated diene polymer, as long as the aforementioned requirements on the molecular weight distribution and the cis-1,4 content are satisfied. A modification rate of the terminal-modified conjugated diene polymer is preferably 70 % or more because then the modifying group can efficiently cause intended effects thereof (e.g. low hysteresis loss, high wear resistance, good braking performance, good dispersibility of fillers). The modification rate is more preferably in the range of 70 % to 90 % in terms of improving the low-fuel consumption property.
Specific types of the modifying agent will be known from the modifying agents described below in connection with a method for manufacturing the terminal-modified conjugated diene polymer.

### < Method for manufacturing terminal-modified conjugated diene polymer >

Type of a method for manufacturing the terminal-modified conjugated diene polymer of the present disclosure is not particularly restricted as long as the terminal-modified conjugated diene polymer described above can be obtained by the method.
It is preferable that the method includes at least polymerization process of polymerizing a conjugated diene compound by using a polymerization catalyst composition and terminal-modifying process of modifying a terminal of the polymer thus obtained by the polymerization, with a modifying agent, in terms of reliably manufacturing the terminal-modified conjugated diene polymer of the present disclosure.

### (Polymerization process)

The polymerization process is a process of polymerizing a conjugated diene compound by using a polymerization catalyst composition. The polymerization catalyst composition preferably contains: a rare earth element compound; a coordinative compound having a cyclopentadiene skeleton selected from the group consisting of substituted/non-substituted cyclopentadiene, substituted/non-substituted indene, and substituted/non-substituted fluorene; an ionic compound constituted of a non-coordinating anion and a cation; and aluminoxane.

### - Polymerization catalyst composition -

The polymerization catalyst composition preferably contains the following components. Component (A): a rare earth element compound,
Component (D): a coordinative compound having a cyclopentadiene skeleton selected from the group consisting of substituted/non-substituted cyclopentadiene, substituted/non-substituted indene, and substituted/non-substituted fluorene, Component (B): an ionic compound (B-1) constituted of a non-coordinating anion and a cation and aluminoxane (B-2).

It is more preferable that the polymerization catalyst composition further includes component (C): a compound represented by general formula (X):

YR³¹ₐR³²_{b}R³³_{c} ··· (X)

(In formula (X), Y represents a metal selected from the group 1, 2, 12 and 13 elements in the periodic table, R³¹ and R³² each represent a hydrogen atom or a C₁₋₁₀ hydrocarbon group, R³³ represents a C₁₋₁₀ hydrocarbon group, R³¹, R³² and R³³ may be of either the same type or different types, a = 1 and b = c = 0 when Y is a metal selected from the group 1 elements in the periodic table, a = b = 1 and c = 0 when Y is a metal selected from the groups 2, 12 elements in the periodic table, and a = b = c = 1 when Y is a metal selected from the group 13 elements in the periodic table.)
When the polymerization catalyst composition includes as the component (B) at least one of the ionic compound (B-1) and a halogen compound (B-3) described below, the polymerization catalyst composition preferably further includes the component (C).

The component (A) of the polymerization catalyst composition is a rare earth element compound. Examples of the rare earth element compound include: a compound containing a rare earth element and preferably a nitrogen atom; and a reaction product obtained by a reaction between a Lewis base and said compound containing a rare earth element and preferably a nitrogen atom.

The rare earth element compound is preferably a rare earth element compound represented by following general formula (a-1):

M-(AQ)¹(AQ)²(AQ)³ ··· (a-1)

(In the formula, M represents an element selected from scandium, yttrium, and the lanthanoid elements, (AQ)¹, (AQ)² and (AQ)³ are functional groups which may be of the same type or different types, "A" represents nitrogen, oxygen or sulfur, and at least one of (AQ)¹, (AQ)² and (AQ)³ forms a M-A bond.)
The aforementioned "M" is preferably gadolinium in terms of enhancing catalytic activity and improving reaction controllability.

In a case where "A" is nitrogen, examples of the functional group represented by AQ¹, AQ² and AQ³ (i.e. NQ¹, NQ² and NQ³) include amide group and the like.
Examples of the amide group include: aliphatic amide group such as dimethylamide, diethylamide, disopropylamide, and the like; arylamide such as phenylamide, 2,6-di-tert-butylphenylamide, 2,6-diisopropylphenylamide, 2,6-dineopentylphenylamide, 2-tert-butyl-6-isopropylphenylamide, 2-tert-butyl-6-neopentylphenylamide, 2-isopropyl-6-neopentylphenylamide, 2,4,6-tert-butylphenylamide, and the like; bistrialkylsilylamide such as bistrimethylsilylamide; and the like. Bistrimethylsilylamide group or the like is particularly preferable among these examples in terms of solubility to aliphatic hydrocarbon.
The aforementioned functional group may be used by either a single type solely or two or more types in combination.

In a case where "A" is oxygen, examples of the rare earth element compound represented by the general formula (a-1), i.e. M-(OQ)¹ (OQ)²(OQ)³, include a rare earth alcoholate compound (I) and a rare earth carboxylate compound (II) shown below, with no limitation thereto:

(RO)₃M (I)

(R-CO₂)₃M (II)

In the formulae (I) and (II), Rs each independently represent a C₁₋₁₀ alkyl group and may be of either the same type or different types.
The component (A) preferably lacks any bond between the rare earth element and carbon. Accordingly, the compound (I) and the compound (II) described above can be suitably used as the component (A).

In a case where "A" is sulfur, examples of the rare earth element compound represented by the general formula (a-1), i.e. M-(SQ)¹(SQ)²(SQ)³, include a rare earth alkylthiolate compound (III) and a rare earth compound (IV) shown below, with no limitation thereto:

(RS)₃M (III)

(R-CS₂)₃M (IV)

In the formulae (III) and (IV), Rs each independently represent a C₁₋₁₀ alkyl group and may be of either the same type or different types.
The component (A) preferably lacks any bond between the rare earth element and carbon. Accordingly, the compound (III) and the compound (IV) described above can be suitably used as the component (A).

The component (B) of the polymerization catalyst composition for use in the aforementioned manufacturing method is a compound containing an ionic compound (B-1) and aluminoxane (B-2). The component (B) may further include a halogen compound (B-3).
The total content of the component (B-1) in the polymerization catalyst composition is 0.1 to 50 times as much as the content of the component (A) when compared in mol.

The ionic compound (B-1) is constituted of a non-coordinating anion and a cation. Examples of the ionic compound (B-1) include an ionic compound capable of being reacted with a rare earth element compound as the compound (A) to generate a cationic transition metal compound.
Examples of the non-coordinating anion include a tetravalent boron anion such as tetraphenylborate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(trifluoromethylphenyl)borate, tetra(tolyl)borate, tetra(xylyl)borate, triphenyl(pentafluorophenyl)borate, [tris(pentafluorophenyl)](phenyl)borate, tridecahydride-7,8-dicarbaundecaborate, and the like. Examples of the cation as a constituent of the ionic compound (B-1) include carbocation, oxonium cation, ammonium cation, phosphonium cation, cycloheptatrienyl cation, ferroceium cation having transition metal, and the like. Specific examples of carbocation include trisubstituted carbocation such as triphenylcarbocation, tri(substituted phenyl)carbocation, and the like. Specific examples of the tri(substituted phenyl)carbocation include tri(methylphenyl)carbocation, tri(dimethylphenyl)carbocation, and the like. Specific examples of the ammonium cation include: trialkylammonium cation such as trimethylammonium cation, triethylammonium cation, tripropylammonium cation, tributylammonium cation (e.g. tri(n-butyl)ammonium cation); N,N-dialkylanilinium cation such as N,N-dimethylanilinium cation, N,N-diethylanilinium cation, N,N-2,4,6-pentamethylanilinium cation, and the like; and dialkylammonium cation such as diisopropylammonium cation, dicyclohexylammonium cation, and the like. Specific examples of phosphonium cation include triarylphosphonium cation such as triphenylphosphonium cation, tri(methylphenyl)phosphonium cation, tri(dimethylphenyl)phosphonium cation, and the like. Accordingly, the ionic compound (B-1) is preferably a compound prepared by selecting a non-coordinating anion and a cation from the aforementioned examples and combining those thus selected. Specific examples of such a compound include N,N-dimethylanilinium tetrakis(pentafluorophenyl)borate, triphenylcarbonium tetrakis(pentafluorophenyl)borate, and the like. These examples of the iconic compound (B-1) may be used by either a single type solely or two or more types in combination. The content of the ionic component (B-1) in the polymerization catalyst composition is preferably 0.1 to 10 times, more preferably approximately 1 times, as much as the content of the component (A) when compared in mol.

Aluminoxane (B-2) is a compound obtained by bringing an organoaluminum compound into contact with a condensing agent. Examples of aluminoxane (B-2) include a chain aluminoxane or a cyclic aluminoxane having repeating units represented by general formula: (-Al(R')O-) (in the formula, R' represents a C₁₋₁₀ organic group; some of the organic groups may be substituted with halogen atom and/or alkoxy group; and the degree of polymerization, of the repeating units, is preferably ≥ 5 and more preferably ≥ 10). Specific examples of R' include methyl, ethyl, proplyl, isobutyl groups and the like. Methyl group is preferable among these examples. Examples of the organoaluminum compound used as a raw material of aluminoxane include trialkylaluminum such as trimethylaluminum, triethylaluminum, tributylaluminum, triisobutylaluminum, and a mixture thereof. Trimethylaluminum is particularly preferable among these examples.
For example, aluminoxane using a mixture of trimethylaluminum and tributylaluminum as a raw material can be suitably used as the aluminoxane (B-2).
It is preferable that, provided that "Al/M" represents an element ratio of the aluminum element Al of an aluminoxane compound with respect to the rare earth element M constituting the component (A), the content of aluminoxane (B-2) in the polymerization catalyst composition is set such that the element ratio Al/M is in the range of 10 to 1000 approximately.

The halogen compound (B-3) is at least one of (i) a Lewis acid, (ii) a complex compound of a metal halide and a Lewis base, and (iii) an organic compound containing an active halogen. The halogen compound (B-3) is, for example, capable of being reacted with a rare earth element compound as the component (A), to generate a cationic transition metal compound, a halogenated transition metal compound, or a compound in which the center of a transition metal is electron-deficient. A complex compound of a metal halide and a Lewis base, rather than a Lewis acid, is suitably used as the halogen compound (B-3) in terms of stability in the ambient air. The total content of the halogen compound (B-3) in the polymerization catalyst composition is preferably 1 to 5 times as much as the content of the component (A) when compared in mol.

Examples of the Lewis acid of the halogen compound (B-3) include a boron-containing halogen compound such as B(C₆F₅)₃, an aluminum-containing halogen compound such as Al(C₆F₅)₃, and a halogen compound containing a group III, IV, V, VI or VIII element in the periodic table. The Lewis acid is preferably aluminum halide or organic metal halide. Chlorine or bromine is preferable as the halogen element. Specific examples of the Lewis acid include methylaluminum dibromide, methylaluminum dichloride, ethylaluminum dibromide, ethylaluminum dichloride, butylaluminum dibromide, butylaluminum dichloride, dimethylaluminum bromide, dimethylaluminum chloride, diethylaluminum bromide, diethylaluminum chloride, dibutylaluminum bromide, dibutylaluminum chloride, methylaluminum sesquibromide, methylaluminum sesquichloride, ethylaluminum sesquibromide, ethylaluminum sesquichloride, dibutyltin dichloride, aluminum tribromide, antimony trichloride, antimony pentachloride, phosphorus trichloride, phosphorus pentachloride, tin tetrachloride, titanium tetrachloride, tungsten hexachloride, and the like. Diethylaluminum chloride, ethylaluminum sesquichloride, ethylaluminum dichloride, diethylaluminum bromide, ethylaluminum sesquibromide, and ethylaluminum dibromide are particularly preferable among these examples. When such a halogen compound as described above is used, a halogen compound containing at least two halogen atoms therein is more reactive, therefore requires less amount for use to complete a reaction, and thus is more suitably employed than a halogen compound containing only a single halogen atom therein. For example, ethylaluminum dichloride can be more suitably used than diethylaluminum chloride.

In respect of a complex compound of a metal halide and a Lewis base as the halogen compound (B-3), examples of the metal halide include beryllium chloride, beryllium bromide, beryllium iodide, magnesium chloride, magnesium bromide, magnesium iodide, calcium chloride, calcium bromide, calcium iodide, barium chloride, barium bromide, barium iodide, zinc chloride, zinc bromide, zinc iodide, cadmium chloride, cadmium bromide, cadmium iodide, mercury chloride, mercury bromide, mercury iodide, manganese chloride, manganese bromide, manganese iodide, rhenium chloride, rhenium bromide, rhenium iodide, copper chloride, copper bromide, copper iodide, silver chloride, silver bromide, silver iodide, gold chloride, gold iodide, gold bromide, and the like. Among these examples, magnesium chloride, calcium chloride, barium chloride, manganese chloride, zinc chloride, and copper chloride are preferable. In this connection, magnesium chloride, manganese chloride, zinc chloride, and copper chloride are particularly preferable.

Examples of the Lewis base constituting the complex compound (of a metal halide and a Lewis base) include a phosphorus compound, a carbonyl compound, a nitrogen compound, an ether compound, alcohol, and the like. Specifically, preferable examples of the Lewis base include tributyl phosphate, tris(2-ethylhexyl) phosphate, triphenyl phosphate, tricresyl phosphate, triethylphosphine, tributylphosphine, triphenylphosphine, diethylphosphinoethane, diphenylphosphinoethane, acetylacetone, benzoylacetone, propionitrileacetone, valerylacetone, ethylacetylacetone, methyl acetoacetate, ethyl acetoacetate, phenyl acetoacetate, dimethyl malonate, diethyl malonate, diphneyl malonate, acetic acid, octanoic acid, 2-ethyl-hexanoic acid, oleic acid, stearic acid, benzoic acid, naphthenic acid, versatic acid, triethylamine, N,N-dimethylacetoamide, tetrahydrofuran, diphenyl ether, 2-ethyl-hexyl alcohol, oleyl alcohol, stearyl alcohol, phenol, benzyl alcohol, 1-decanol, lauryl alcohol, and the like. Among these examples, tris(2-ethylhexyl) phosphate, tricresyl phosphate, acetylacetone, 2-ethyl-hexanoic acid, versatic acid, 2-ethyl-hexyl alcohol, 1-decanol, and lauryl alcohol are preferable.

Examples of the organic compound containing an active halogen as the halogen compound (B-3) include benzyl chloride.

The component (C) suitably included in the polymerization catalyst composition is an organometallic compound represented by following general formula (X):

YR³¹ₐR³²_{b}R³³_{c} ··· (X)

(In formula (X), Y represents a metal selected from the group 1, 2, 12 and 13 elements in the periodic table, R³¹ and R³² each represent a hydrogen atom or a C₁₋₁₀ hydrocarbon group, R³³ represents a C₁₋₁₀ hydrocarbon group, R³¹, R³² and R³³ may be of either the same type or different types, a = 1 and b = c = 0 when Y is a metal selected from the group 1 elements in the periodic table, a = b = 1 and c = 0 when Y is a metal selected from the groups 2, 12 elements in the periodic table, and a = b = c = 1 when Y is a metal selected from the group 13 elements in the periodic table.)
The component (C) is preferably an organoaluminum compound represented by following general formula (Xa):

AlR³¹R³²R³³ ··· (Xa)

(In formula (Xa), R³¹ and R³² each represent a hydrogen atom or a C₁₋₁₀ hydrocarbon group, R³³ represents a C₁₋₁₀ hydrocarbon group, R³¹, R³² and R³³ may be of either the same type or different types.)
Examples of the organoaluminum compound represented by the general formula (Xa) include trimethylaluminum, triethylaluminum, tri-n-propylaluminum, triisopropylaluminum, tri-n-butylaluminum, triisobutylaluminum, tri-t-butylaluminum, tripentylaluminum, trihexylaluminum, tricyclohexylaluminum, trioctylaluminum; hydrogenated diethylaluminum, hydrogenated di-n-propylaluminum, hydrogenated di-n-butylaluminum, hydrogenated diisobutylaluminum, hydrogenated dihexylaluminum, hydrogenated diisohexylaluminum, hydrogenated dioctylaluminum, hydrogenated diisooctylaluminum; ethylaluminum dihydride, n-propylaluminum dihydride, isobutylaluminum dihydride, and the like. Triethylaluminum, triisobutylaluminum, hydrogenated diethylaluminum and hydrogenated diisobutylaluminum are preferable among these examples. These examples of the organoaluminum compound as the component (C) may be used by either a single type solely or two or more types in combination.
The content of an organoaluminum compound in the polymerization catalyst composition is preferably 1 to 50 times, more preferably approximately 10 times, as much as the content of the component (A) when compared in mol.

The component (D) included in the polymerization catalyst composition is a coordinative compound having a cyclopentadiene skeleton selected from the group consisting of substituted/non-substituted cyclopentadiene, substituted/non-substituted indene, and substituted/non-substituted fluorene. It is possible to obtain a terminal-modified conjugated diene polymer having a very high cis-1,4 content at a high yield by a steric hindrance effect caused by the component (D).
Polymerization must be carried out under a low temperature condition in a case where the conventional auxiliary catalyst, i.e. a compound which can serve as an anionic ligand, is used for the polymerization. In contrast, in a case where the aforementioned coordinative compound is used for the polymerization, it is possible to carry out polymerization at high temperature because of high solubility and excellent stereocontrollability of the coordinative compound.

Type of the coordinative compound having a cyclopentadiene skeleton is not particularly restricted as long as the coordinative compound has a cyclopentadiene skeleton selected from the group consisting of substituted/non-substituted cyclopentadiene, substituted/non-substituted indene, and substituted/non-substituted fluorene. However, the coordinative compound having an indenyl group is preferable in terms of achieving satisfactorily high catalytic activity because the coordinative compound having an indenyl group can exhibit high catalytic activity without use of toluene having high environmental loads as a solvent in polymerization.

Examples of the coordinative compound having an indenyl group include indene, 1-methylindene, 1-ethylindene, 1-benzylindene, 2-phenylindene, 2-methylindene, 2-ethylindene, 2-benzylindene, 3-methylindene, 3-ethylindene, 3-benzylindene, and the like.

It is possible to prepare the polymerization catalyst composition, for example, by dissolving the components (A)-(D) in a solvent.
In this respect, the order of adding the respective components is not particularly restricted. It is preferable, in terms of enhancing polymerization activity and making the polymerization initiation induction period short, to mix these components in advance so that they are preliminarily reacted with each other and aged. In this regard, the temperature for ageing is generally in the range of 0 °C to 100 °C and preferably in the range of 20 °C to 80 °C. The ageing temperature lower than 0 °C may result in insufficient ageing and the ageing temperature over 100 °C may degrade catalytic activity and a widened molecular weight distribution of a target composition. A period of time for ageing is not particularly restricted and in general 0.5 minute or longer is sufficient for the purpose. The composition will remain stable for a few days. Ageing can be carried out by bringing the respective components into contact with each other in a supply line prior to being fed to a polymerization reaction tank.

### - Polymerization method -

Type of the polymerization method is not particularly restricted. However, it is preferable to sequentially charge the reactants into the reaction system (i.e. to complete polymerization in one pot) in terms of obtaining a desired conjugated diene polymer without carrying out complicated processes. Polymerization method in the present disclosure may be any conventional polymerization method such as solution polymerization, suspension polymerization, liquid-phase bulk polymerization, emulsion polymerization, vapor-phase polymerization, or solid-phase polymerization. In a case where a solvent is used for the polymerization reaction, any solvent inactive in the polymerization reaction can be used and examples thereof include normal hexane, toluene, cyclohexane, a mixture thereof, and the like. Cyclohexane, normal hexane, or a mixture thereof are suitable for use in terms of an impact on the environment, cost and the like in particular.
In the polymerization process, polymerization may be terminated by using a polymerization terminator such as methanol, ethanol, isopropanol, or the like.

The polymerization reaction of the conjugated diene monomer is carried out under an atmosphere of inert gas (preferably nitrogen gas, argon gas or the like) in the polymerization process. The polymerization temperature, although it is not particularly restricted, is preferably in the range of -100 °C to 300 °C and may be around the room temperature. High polymerization temperature may adversely affect selectivity of the cis-1,4 bond during the polymerization reaction. Pressure during the polymerization reaction is preferably in the range of 0.1 MPa to 10.0 MPa in terms of ensuring introducing a sufficient amount of the conjugated diene compound into the polymerization reaction system. Reaction time for the polymerization reaction, although it is not particularly restricted and may be appropriately adjusted in accordance with conditions such as type of the catalyst, the polymerization temperature, and the like, is preferably in the range of 1 second to 10 days.

### (Terminal-modifying process)

The terminal-modifying process is a process of modifying a terminal of a conjugated diene polymer thus obtained by the polymerization process, with a modifying agent. The terminal-modifying process is preferably carried out in the same reaction system as the polymerization process (i.e. in one pot).

The modifying agent for use in the terminal-modifying process is a compound having a functional group reactive to an active organic metal parts of the polymer to cause a substitution reaction or an addition reaction therebetween and not having an active proton which could inactivate the active organic metal parts of the polymer. A functional group thus added to the polymer as a result of the reaction between the aforementioned modifying agent and the polymer (and/or occurrence of coupling) increases molecular weight of the polymer.
Examples of the representative modifying agent include a compound having at least one functional group selected from the group consisting of azacyclopropane, ketone, carboxyl, thiocarboxyl, a carbonate, carboxylic acid anhydride, metal salt of carboxylic acid, acid halide, urea, thiourea, amide, thioamide, isocyanate, thioisocyanate, halogenated isocyano, epoxy, thioepoxy, imine groups, and M-Z bond ("M" represents Sn, Si, Ge or P and "Z" represents a halogen atom) and not having an active proton, an onium salt which could inactivate active organic metal parts of the polymer; and the like.

Specifically, the modifying agent is preferably at least one selected from following compounds (a)-(j).

The compound (a) is a compound represented by general formula (V) shown below. 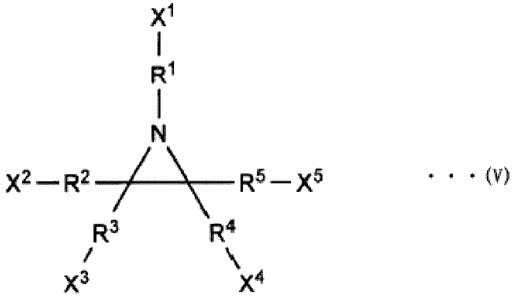 In general formula (V), X¹-X⁵ each independently represent a hydrogen atom or a halogen atom or a monovalent functional group selected from the group consisting of carbonyl, thiocarbonyl, isocyanate, thioisocyanate, epoxy,thioepoxy, halogenated silyl, hydrocarbyloxysilyl, and sulphonyloxy groups and having no active proton and no onium salt. X¹-X⁵ may be of either the same type or different types and at least one of X¹-X⁵ is other than hydrogen atom.
In general formula (V), R¹-R⁵ each independently represent single bond or a divalent C₁₋₁₈ hydrocarbon group. Examples of the divalent hydrocarbon group include C₁₋₁₈ alkylene group, C₂₋₁₈ alkenylene group, C₆₋₁₈ arylene group, C₇₋₁₈ aralkylene group, and the like. C₁₋₁₈ alkylene group, C₁₋₁₀ alkylene group in particular, is preferable among these examples. The alkylene group may be linear, branched, or cyclic and is preferably linear. Examples of the linear alkylene group include methylene, ethylene, trimethylene, tetramethylene, pentamethylene, hexamethylene, octamethylene, decamethylene groups, and the like.
A plurality of aziridine rings may be linked via any of X¹-X⁵ and R¹-R⁵.
The compound (a) represented by the general formula (V) preferably does not allow a situation in which X¹ is hydrogen atom and R¹ is a single bond simultaneously.

Examples of the compound (a) represented by the general formula (V) include 1-acetylaziridine, 1-propionylaziridine, 1-butyrylaziridine, 1-isobutyrylaziridine, 1-valerylaziridine, 1-isovalerylaziridine, 1-pivaloylaziridine, 1-acetyl-2-methylaziridine, 2-methyl-1-propionylaziridine, 1-butyryl-2-methylaziridine, 2-methyl-1-isobutyrylaziridine, 2-methyl-1-valerylaziridine, 1-isovaleryl-2-methylaziridine, 2-methyl-1-pivaloylaziridine, ethyl 3-(1-aziridinyl)propionate, propyl 3-(1-aziridinyl)propionate, butyl 3-(1-aziridinyl)propionate, ethylene glycol bis[3-(1-aziridinyl)propionate], trimethylolpropane tris[3-(1-aziridinyl)propionate], ethyl 3-(2-methyl-1-aziridinyl)propionate, propyl 3-(2-methyl-1-aziridinyl)propionate, butyl 3-(2-methyl-1-aziridinyl)propionate, ethylene glycol bis[3-(2-methyl-1-aziridinyl)propionate], trimethylolpropane tris[3-(2-methyl-1-aziridinyl)propionate], neopentyl glycol bis[3-(1-aziridinyl)propionate], neopentyl glycol bis[3-(2-methyl-1-aziridinyl)propionate], di(1-aziridinylcarbonyl)methane, 1,2-di(1-aziridinylcarbonyl)ethane, 1,3-di(1-aziridinylcarbonyl)propane, 1,4-di(1-aziridinylcarbonyl)butane, 1,5-di(1-aziridinylcarbonyl)pentane, di(2-methyl-1-aziridinylcarbonyl)methane, 1,2-di(2-methyl-1-aziridinylcarbonyl)ethane, 1,3-di(2-methyl-1-aziridinylcarbonyl)propane, 1,4-di(2-methyl-1-aziridinylcarbonyl)butane, and the like. The compound (a) is not restricted to these examples.

The compound (b) is a halogenated organometallic compound represented by general formula R⁶ₙM'Z₄₋ₙ or a metal halide compound represented by general formula M'Z₄ or general formula M'Z₃.
(In the general formulae, R⁶ may be of either the same type or different types and independently represents a C₁₋₂₀ hydrocarbon group, M' represents tin atom, silicon atom, germanium atom or phosphorus atom, "Z" represents halogen atom, and "n" represents an integer in the range of 0 to 3).

In the aforementioned formulae, when M' represents tin atom, examples of the compound (b) include triphenyltin chloride, tributyltin chloride, triisopropyltin chloride, trihexyltin chloride, trioctyltin chloride, diphenyltin dichloride, dibutyltin dichloride, dihexltin dichloride, dioctyltin dichloride, phenyltin trichloride, butyltin trichloride, octyltin trichloride, tin tetrachloride, and the like.

In the aforementioned formulae, when M' represents silicon atom, examples of the compound (b) include triphenylchlorosilane, trihexylchlorosilane, trioctylchlorosilane, tributylchlorosilane, trimethylchlorosilane, diphenyldichlorosilane, dihexyldichlorosilane, dioctyldichlorosilane, dibutyldichlorosilane, dimethyldichlorosilane, methyldichlorosilane, phenylchlorosilane, hexyltri(di)chlorosilane, octyltrichlorosilane, butyltrichlorosilane, methyltrichlorosilane, silicon tetrachloride, and the like.

Further, in the aforementioned formulae, when M' represents germanium atom, examples of the compound (b) include triphenylgermanium chloride, dibutylgermanium dichloride, diphenylgermanium dichloride, butylgermanium trichloride, germanium tetrachloride, and the like. Yet further, in the aforementioned formulae, when M' represents phosphorus atom, examples of the compound (b) include phosphorus trichloride, and the like.

Further, it is possible to use as the modifying agent an organometallic compound having in a molecule thereof ester group or carbonyl group represented by general formula shown below.

R⁷ₙM'(-R⁸-COOR⁹)₄₋ₙ

R⁷ₙM'(-R⁸-COR⁹)₄₋ₙ

(In the formulae, R⁷ and R⁸ may be of either the same type or different types and each independently represent a C₁₋₂₀ organic group, R⁹ represents a C₁₋₂₀ organic group, a side chain may have carbonyl group or ester group. Further, M' represents tin atom, silicon atom, germanium atom or phosphorus atom and "n" represents an integer in the range of 0 to 3).
In a case where two or more types of the compounds (b) are used in combination, the proportions of the respective types may be set as desired.

The compound (c) is a modifying agent which is a heterocumulene compound having Y=C=Y' bond in a molecule thereof.
In the formula of the compound (c), Y represents carbon atom, oxygen atom, nitrogen atom, or sulfur atom and Y' represents oxygen atom, nitrogen atom, or sulfur atom. When Y represents carbon atom and Y' represents oxygen atom, the compound (c) is a ketene compound. When Y represents carbon atom and Y' represents sulfur atom, the compound (c) is a thioketene compound. When Y represents nitrogen atom and Y' represents oxygen atom, the compound (c) is an isocyanate compound. When Y represents nitrogen atom and Y' represents sulfur atom, the compound (c) is a thioisocyanate compound. When Y and Y' each represent nitrogen atom, the compound (c) is a carbodiimide compound. When Y and Y' each represent oxygen atom, the compound (c) is carbon dioxide. When Y represents oxygen atom and Y' represents sulfur atom, the compound (c) is a carbonyl sulfide. When Y and Y' each represent sulfur atom, the compound (c) is carbon disulfide. However, the compound (c) is not restricted to the aforementioned combinations of Y and Y'.

Examples of the ketene compound include ethylketene, butylketene, phenylketene, toluylketene, and the like. Examples of the thioketene compound include ethylenethioketene, butylthioketene, phenylthioketene, toluylthioketene, and the like. Examples of the isocyanate compound include phenyl isocyanate, 2,4-tolylene diisocyanate, 2,6-tolylene diisocyanate, diphenylmethane diisocyanate, diphenylmethane diisocyanate (polymeric type), hexamethylene diisocyanate, and the like. Examples of the thioisocyanate compound include phenyl thioisocyanate, 2,4-tolylene dithioisocyanate, hexamethylene dithioisocyanate, and the like. Examples of the carbodiimide compound include N,N'-diphenylcarbodiimide, N,N'-ethylcarbodiimide, and the like.

The compound (d) is a heterocyclic three-membered compound represented by general formula (VI) shown below. 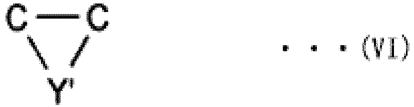 (In the general formula (VI), Y' represents oxygen atom or sulfur atom.)
When Y' represents oxygen atom, the compound (d) is an epoxy compound. Examples of the epoxy compound include ethylene oxide, propylene oxide, cyclohexene oxide, styrene oxide, epoxidized soybean oil, epoxidized natural rubber, and the like. When Y' represents sulfur atom, the compound (d) is a thiirane compound. Examples of the thiirane compound include thiirane, methylthiirane, phenylthiirane, and the like.

The compound (e) is a halogenated isocyano compound having >N=C-X bond (in the formula, X represents halogen atom).
Examples of the halogenated isocyano compound as the compound (e) include 2-amino-6-chloropyridine, 2,5-dibromopyridine, 4-chloro-2-phenylquinazoline, 2,4,5-tribromoimidazole, 3,6-dichloro-4-methylpyridazine, 3,4,5-trichloropyridazine, 4-amino-6-chloro-2-mercaptopyrimidine, 2-amino-4-chloro-6-methylpyrimidine, 2-amino-4,6-dichloropyrimidine, 6-chloro-2,4-dimethoxypyrimidine, 2-chloropyrimidine, 2,4-dichloro-6-methylpyrimidine, 4,6-dichloro-2-(methylthio) pyrimidine, 2,4,5,6-tetrachloropyrimidine, 2,4,6-trichloropyrimidine, 2-amino-6-chloropyrazine, 2,6-dichloropyrazine, 2,4-bis(methylthio)-6-chloro-1,3,5-triazine, 2,4,6-trichloro-1,3,5-triazine, 2-bromo-5-nitrothiazole, 2-chlorobenzothiazole, 2-chlorobenzoxazole, and the like.

The compound (f) is a carboxylic acid represented by general formula R¹⁰-(COOH)ₘ, or an acid halide represented by general formula R¹¹(COZ)ₘ, or an ester compound represented by general formula R¹²-(COO-R¹³), or a carbonic acid ester compound represented by general formula R¹⁴-OCOO-R¹⁵, or an acid anhydride represented by general formula R¹⁶-(COOCO-R¹⁷)ₘ, or an acid anhydride represented by general formula (VII) shown below. In the formulae, R¹⁰ to R¹⁷ each independently represent a C₁₋₅₀ hydrocarbon group and may be of either the same type or different types, "Z" represents halogen atom, and "m" is an integer in the range of 1 to 5.

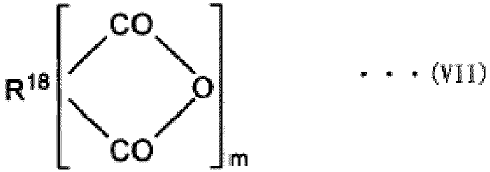

Examples of the carboxylic acid as the compound (f) include acetic acid, stearic acid, adipic acid, maleic acid, benzoic acid, acrylic acid, methacrylic acid, phthalic acid, isophthalic acid, telephthalic acid, trimellitic acid, pyromellitic acid, mellitic acid, products obtained by complete/partial hydrolysis of a polymethacrylic acid ester compound/a polyacrylic acid ester compound, and the like.

Examples of the acid halide as the compound (f) include acetic acid chloride, propyonic acid chloride, butanoic acid chloride, isobutanoic acid chloride, octanoic acid chloride, acrylic acid chloride, benzoic acid chloride, stearic acid chloride, phthalic acid chloride, maleic acid chloride, oxalic acid chloride, acetyl iodide, benzoyl iodide, acetyl fluoride, benzoyl fluoride, and the like.

Examples of the ester compound as the compound (f) include ethyl acetate, ethyl stearate, diethyl adipate, diethyl maleate, methyl benzoate, ethyl acrylate, ethyl methacrylate, diethyl phthalate, dimethyl telephthalate, tributyl trimellitate, tetraoctyl pyromellitate, hexaethyl mellitate, phenyl acetate, polymethyl methacrylate, polyethyl acrylate, polyisobutyl acrylate, and the like. Examples of the carbonic acid ester compound as the compound (f) include dimethyl carbonate, diethyl carbonate, dipropyl carobante, dihexyl carbonate, diphenyl carbonate, and the like. Examples of the acid anhydride as the compound (f) include: intermolecular acid anhydride such as acetic anhydride, propionic anhydride, isobutyric anhydride, isovaleric anhydride, heptanoic anhydride, benzoic anhydride, cinnamic anhydride; and intramolecular acid anhydride such as succinic anhydride, methylsuccnic anhydride, maleic anhydride, glutaric anhydride, citraconic anhydride, phthalic anhydrie, styrene-maleic anhydride copolymer, and the like.

The aforementioned compounds as examples of the compound (f) may be a coupling agent having in a molecule thereof a non-protonic polar group such as ether group, tertiary amino group, or the like, within the spirit of the present disclosure. These examples of the compound (f) may be used by either a single type solely or two or more types in combination. The compound (f) may include therein as an impurity a compound having free alcohol group and/or phenol group.

The compound (g) is a metal salt of carboxylic acid represented by general formula R¹⁹ₖM"(OCOR²⁰)₄₋ₖ, general formula R²¹ₖM"(OCO-R²²-COOR²³)₄₋ₖ, or general formula (VIII) shown below. In the formulae, R¹⁹ to R²⁵ may be of either the same type or different types and each independently represent a C₁₋₂₀ hydrocarbon group, M" represents tin atom, silicon atom or germanium atom, "k" is an integer in the range of 0 to 3, and "p" is 0 or 1.

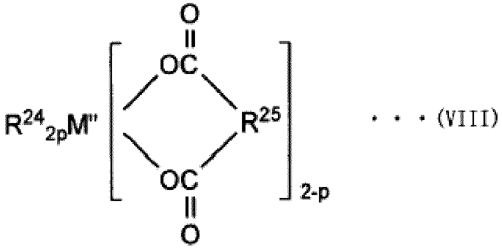

Examples of the metal salt of carboxylic acid represented by the general formula R¹⁹ₖM"(OCOR²⁰)₄₋ₖ as the compound (g) include triphenyltin laurate, triphenyltin-2-ethylhexatate, triphenyltin naphthenate, triphenyltin acetate, triphenyltin acrylate, tri-n-butyltin laurate, tri-n-butyltin 2-ethylhexatate, tri-n-butyltin naphthenate, tri-n-butyltin acetate, tri-n-butyltin acrylate, tri-t-butyltin laurate, tri-t-butyltin 2-ethylhexatate, tri-t-butyltin naphthenate, tri-t-butyltin acetate, tri-t-butyltin acrylate, triisobutyltin laurate, triisobutyltin 2-ethylhexatate, triisobutyltin naphthenate, triisobutyltin acetate, triisobutyltin acrylate, triisopropyltin laurate, triisopropyltin 2-ethylhexatate, triisopropyltin naphthenate, triisopropyltin acetate, triisopropyltin acrylate, trihexyltin laurate, trihexyltin 2-ethylhexatate, trihexyltin acetate, trihexyltin acrylate, trioctyltin laurate, trioctyltin 2-ethylhexatate, trioctyltin naphthenate, trioctyltin acetate, trioctyltin acrylate, tri-2-ethylhexyltin laurate, tri-2-ethylhexyltin 2-ethylhexatate, tri-2-ethylhexyltin naphthenate, tri-2-ethylhexyltin acetate, tri-2-ethylhexyltin acrylate, tristearyltin laurate, tristearyltin 2-ethylhexatate, tristearyltin naphthenate, tristearyltin acetate, tristearyltin acrylate, tribenzyltin laurate, tribenzyltin 2-ethylhexatate, tribenzyltin naphthenate, tribenzyltin acetate, tribenzyltin acrylate, diphenyltin dilaurate, diphenyltin di-2-ethylhexatate, diphenyltin distearate, diphenyltin dinaphthenate, diphenyltin diacetate, diphenyltin diacrylate, di-n-butyltin dilaurate, di-n-butyltin di-2-ethylhexatate, di-n-butyltin distearate, di-n-butyltin dinaphthenate, di-n-butyltin diacetate, di-n-butyltin diacrylate, di-t-butyltin dilaurate, di-t-butyltin di-2-ethylhexatate, di-t-butyltin distearate, di-t-butyltin dinaphthenate, di-t-butyltin diacetate, di-t-butyltin diacrylate, diisobutyltin dilaurate, diisobutyltin di-2-ethylhexatate, diisobutyltin distearate, diisobutyltin dinaphthenate, diisobutyltin diacetate, diisobutyltin diacrylate, diisopropyltin dilaurate, diisopropyltin di-2-ethylhexatate, diisopropyltin distearate, diisopropyltin dinaphthenate, diisopropyltin diacetate, diisopropyltin diacrylate, dihexyltin dilaurate, dihexyltin di-2-ethylhexatate, dihexyltin distearate, dihexyltin dinaphthenate, dihexyltin diacetate, dihexyltin diacrylate, di-2-ethylhexyltin dilaurate, di-2-ethylhexyltin di-2-ethylhexatate, di-2-ethylhexyltin distearate, di-2-ethylhexyltin dinaphthenate, di-2-ethylhexyltin diacetate, di-2-ethylhexyltin diacrylate, dioctyltin dilaurate, dioctyltin di-2-ethylhexatate, dioctyltin distearate, dioctyltin dinaphthenate, dioctyltin diacetate, dioctyltin diacrylate, distearyltin dilaurate, distearyltin di-2-ethylhexatate, distearyltin distearate, distearyltin dinaphthenate, distearyltin diacetate, distearyltin diacrylate, dibenzyltin dilaurate, dibenzyltin di-2-ethylhexatate, dibenzyltin distearate, dibenzyltin dinaphthenate, dibenzyltin diacetate, dibenzyltin diacrylate, phenyltin trilaurate, phenyltin tri-2-ethylhexatate, phenyltin trinaphthenate, phenyltin triacetate, phenyltin triacrylate, n-butyltin trilaurate, n-butyltin tri-2-ethylhexatate, n-butyltin trinaphthenate, n-butyltin triacetate, n-butyltin triacrylate, t-butyltin trilaurate, t-butyltin tri-2-ethylhexatate, t-butyltin trinaphthenate, t-butyltin triacetate, t-butyltin triacrylate, isobutyltin trilaurate, isobutyltin tri-2-ethylhexatate, isobutyltin trinaphthenate, isobutyltin triacetate, isobutyltin triacrylate, isopropyltin trilaurate, isopropyltin tri-2-ethylhexatate, isopropyltin trinaphthenate, isopropyltin triacetate, isopropyltin triacrylate, hexyltin trilaurate, hexyltin tri-2-ethylhexatate, hexyltin trinaphthenate, hexyltin triacetate, hexyltin triacrylate, octyltin trilaurate, octyltin tri-2-ethylhexatate, octyltin trinaphthenate, octyltin triacetate, octyltin triacrylate, 2-ethylhexyltin trilaurate, 2-ethylhexyltin tri-2-ethylhexatate, 2-ehylhexyltin trinaphthenate, 2-ehylhexyltin triacetate, 2-ehylhexyltin triacrylate, stearyltin trilaurate, stearyltin tri-2-ethylhexatate, stearyltin trinaphthenate, stearyltin triacetate, stearyltin triacrylate, benzyltin trilaurate, benzyltin tri-2-ethylhexatate, benzyltin trinaphthenate, benzyltin triacetate, benzyltin triacrylate, and the like.

Examples of the metal salt of carboxylic acid represented by the general formula R²¹ₖM"(OCO-R²²-COOR²³)₄₋ₖ as the compound (g) include diphenyltin bis(methylmaleate), diphenyltin bis(2-ethylhexatate), diphenyltin bis(octylmaleate), diphenyltin bis(benzylmaleate), di-n-butyltin bis(methylmaleate), di-n-butyltin bis(2-ethylhexatate), di-n-butyltin bis(octylmaleate), di-n-butyltin bis(benzylmaleate), di-t-butyltin bis(methylmaleate), di-t-butyltin bis(2-ethylhexate), di-t-butyltin bis(octylmaleate), di-t-butyltin bis(benzylmaleate), diisobutyltin bis(methylmaleate), diisobutyltin bis(2-ethylhexatate), diisobutyltin bis(octylmaleate), diisobutyltin bis(benzylmaleate), diisopropyltin bis(methylmaleate), diisopropyltin bis(2-ethylhexatate), diisopropyltin bis(octylmaleate), diisopropyltin bis(benzylmaleate), dihexyltin bis(methylmaleate), dihexyltin bis(2-ethylhexatate), dihexyltin bis(octylmaleate), dihexyltin bis(benzylmaleate), di-2-ethylhexyltin bis(methylmaleate), di-2-ethylhexyltin bis(2-ethylhexatate), di-2-ethylhexyltin bis(octylmaleate), di-2-ethylhexyltin bis(benzylmaleate), dioctyltin bis(methylmaleate), dioctyltin bis(2-ethylhexatate), dioctyltin bis(octylmaleate), dioctyltin bis(benzylmaleate), distearyltin bis(methylmaleate), distearyltin bis(2-ethylhexatate), distearyltin bis(octylmaleate), distearyltin bis(benzylmaleate), dibenzyltin bis(methylmaleate), dibenzyltin bis(2-ethylhexatate), dibenzyltin bis(octylmaleate), dibenzyltin bis(benzylmaleate), diphenyltin bis(methyladipate), diphenyltin bis(octyladipate), diphenyltin bis(benzyladipate), di-n-butyltin bis(methyladipate), di-n-butyltin bis(octyladipate), di-n-butyltin bis(benzyladipate), di-t-butyltin bis(methyladipate), di-t-butyltin bis(octyladipate), di-t-butyltin bis(benzyladipate), diisobutyltin bis(methyladipate), diisobutyltin bis(octyladipate), diisobutyltin bis(benzyladipate), diisopropyltin bis(methyladipate), diisopropyltin bis(octyladipate), diisopropyltin bis(benzyladipate), dihexyltin bis(methyladipate), dihexyltin bis(methyladipate), dihexyltin bis(benzyladipate), di-2-ethylhexyltin bis(octyladipate), di-2-ethylhexyltin bis(octyladipate), di-2-ethylhexyltin bis(benzyladipate), dioctyltin bis(methyladipate), dioctyltin bis(octyladipate), dioctyltin bis(benzyladipate), distearyltin bis(methyladipate), distearyltin bis(octyladipate), distearyltin bis(benzyladipate), dibenzyltin bis(methyladipate), dibenzyltin bis(octyladipate), dibenzyltin bis(benzyladipate), and the like.

Examples of the metal salt of carboxylic acid represented by general formula (VIII) as the compound (g) include diphenyltin maleate, di-n-butyltin maleate, di-t-butyltin maleate, diisobutyltin maleate, diisopropyltin maleate, dihexyltin maleate, di-2-ethylhexyltin maleate, dioctyltin maleate, distearyltin maleate, dibenzyltin maleate, diphenyltin adipate, di-n-butyltin adipate, di-t-butyltin adipate, diisobutyltin adipate, diisopropyltin adipate, dihexyltin diacetate, di-2-ethylhexyltin adipate, dioctyltin adipate, distearyltin adipate, dibenzyltin adipate, and the like.

### (Compound (h))

The compound (h) is N-substituted amino ketone, N-substituted amino thioketone, N-substituted amino aldehyde, N-substituted amino thioaldehyde, or a compound having in a molecule thereof -C-(=M)-N< bond ("M" represents oxygen atom or sulfur atom).

Examples of the compound (h) include: N-substituted amino ketones and N-substituted amino thioketones corresponding thereto such as 4-dimethylaminoacetophenone, 4-diethylaminoacetophenone, 1,3-bis(diphenylamino)-2-propanone, 1,7-bis(methylethylamino)-4-heptanone, 4-dimethylaminobenzophenone, 4-di-t-butylaminobenzophenone, 4-diphenylaminobenzophenone, 4,4'-bis(dimethylamino)benzophenone, 4,4'-bis(diethylamino)benzophenone, 4,4'-bis(diphenylamino)benzophenone; N-substituted amino aldehydes and N-substituted amino thioaldehydes corresponding thereto such as 4-dimethylaminobenzaldehyde, 4-diphenylaminobenzaldehyde, 4-divinylaminobenzaldehyde; a compound having in a molecule thereof -C-(=M)-N< bond (M represents oxygen atom or sulfur atom), e.g. N-substituted lactams and N-substituted thiolactams corresponding thereto such as N-methyl-β-propiolactam, N-phenyl-β-propiolactam, N-methyl-2-pyrrolidone, N-phenyl-2-pyrrolidone, N-t-butyl-2-pyrrolidone, N-phenyl-5-methyl-2-pyrrolidone, N-methyl-2-piperidone, N-phenyl-2-piperidone, N-methyl-ε-caprolactam, N-phenyl-ε-caprolactam, N-methyl-ω-caprolactam, N-phenyl-ω-caprolactam, N-methyl-ω-laurylolactam, N-vinyl-ω-laurylolactam; N-substituted cyclic ureas and N-substituted cyclic thioureas corresponding thereto such as 1,3-dimethylethyleneurea, 1,3-divinylethyleneurea, 1,3-diethyl-2-imidazolidinone, 1-methyl-3-ethyl-2-imidazolidinone, 1,3-dimethyl-2-imidazolidinone; and the like.

The compound (i) is a compound having N≡C- bond. In the present disclosure, "a compound having N≡C- bond" is an organocyano compound represented by general formula R²⁶-CN (R²⁶ represents an aliphatic hydrocarbon, an aromatic hydrocarbon, a heterocyclic compound).
Specific examples of the compound represented by general formula R²⁶-CN include: 2-cyanopyridine, 3-cyanopyridine, acrylonitrile; an electron-withdrawing compound typically represented by ketone, aldehyde and epoxy, such as benzaldehyde, benzophenone, 4-4'-bis(diethylamino)benzophenone, 3-glycidoxypropyltrimethoxysilane, allyl glycidyl ether; an organic compound having vinyl group, such as propylene, 1-butene, 1-hexene, styrene, vinylnaphthalene, vinyl phosphate, vinyl acetate ether, vinyl pivalate, vinyltrimethylsilane, triethoxyvinylsilane; and the like.

The compound (j) is a compound having a phosphate residue represented by general formula (IX) shown below. 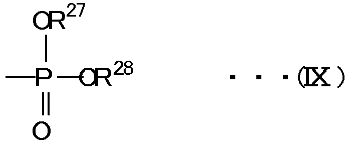 (In the formulae (IX), R²⁷ and R²⁸ each independently represent hydrogen atom or a monovalent hydrocarbon group selected from a C₁₋₂₀ linear/branched alkyl group, a C₃₋₂₀ monovalent alicyclic hydrocarbon, and a C₆₋₂₀ monovalent aromatic hydrocarbon group.) Specifically, examples of the phosphate residue represented by general formula (IX) include phosphate residues represented by general formula (IXa) shown below.

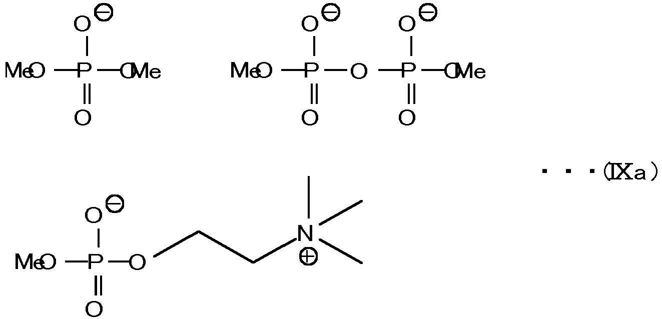

The compounds (a)-(j) may be used by either a single type solely or two or more types in combination. The compounds (a)-(j) may be used in combination with a modifying agent other than the compounds (a)-(j).

A modification reaction in the terminal-modifying process may be either a solution phase reaction or a solid phase reaction. The modification reaction is preferably a solution phase reaction (a solution containing unreacted monomers used in the polymerization may be utilized). Type of the modification reaction is not particularly restricted. The modification reaction may be carried out either by using a batch-type reactor or in a continuous manner by using a device such as multi-stage continuous reactor, an inline mixer or the like. The modification reaction is carried out preferably after the completion of the polymerization reaction and before solvent removal, water processing, heat treatment, and the operations required for separation of polymer.

Temperature in the modification reaction may be set in accordance with the polymerization temperature of the conjugated diene polymer. Specifically, the temperature in the modification reaction is preferably in the range of 20 °C to 100 °C. Too low temperature during the modification reaction tends to increase viscosity of the polymer and too high temperature during the modification reaction may facilitate inactivation of active terminals of the polymer, which are both undesirable.

Content of the modifying agent for use, with respect to the component (A) of the polymerization catalyst composition, may be adjusted in accordance with a desired terminal modification rate of the modified polymer and is in a mole ratio preferably in the range of 0.1 to 100, more preferably in the range of 1.0 to 50. It is possible to facilitate the modification reaction and obtain a polymer which does not generate a (gel) component insoluble to an organic solvent such as toluene and is excellent in low heat generation property and wear resistance, by setting the content of the modifying agent for use to be within the aforementioned ranges.
The modification reaction may be carried out generally at temperature in the range of the room temperature to 100 °C with stirring in a period preferably in the range of 0.5 minute to 2 hours, more preferably in the range of 3 minutes to 1 hour. It is possible to obtain a conjugated diene polymer having a high terminal modification rate (preferably 70 % or more) by carrying out polymerization under the catalyst and polymerization conditions for achieving a high terminal-living rate and then a subsequent terminal modification reaction.

### < Rubber composition >

A rubber composition of the present disclosure contains at least a rubber component and optionally filler, crosslinking agent and other components.
In this respect, the rubber composition of the present disclosure is characterized in that it contains the terminal-modified conjugated diene polymer of the present disclosure as the rubber component. As a result, the rubber composition can obtain excellently high durability (high wear resistance, high fracture resistance, high cracking resistance, and the like).

Content of the terminal-modified conjugated diene polymer to be blended in the rubber component, which content is not particularly restricted and may be appropriately selected in accordance with applications, is preferably 15 mass % or more. Setting the content of the terminal-modified conjugated diene polymer in the rubber component to be 15 mass % ensures satisfactory demonstration of the characteristics of the terminal-modified conjugated diene polymer.

The rubber component may be mixed with, in addition to the terminal-modified conjugated diene polymer, other rubber components such as isoprene rubber (BR), styrene butadiene rubber (SBR), acrylonitrile-butadiene rubber (NBR), ethylene-propylene rubber (EPM), ethylene-propylene-non conjugated diene rubber (EPDM), polysulfide rubber, silicone rubber, flurorubber, urethane rubber, isoprene copolymer, and the like. These rubbers may be used by either a single type solely or two or more types in combination.

Type of the filler contained in the rubber composition of the present disclosure is not particularly restricted and may be appropriately selected in accordance with applications. Examples of the filler include carbon black, inorganic filler, and the like. The filler is preferably at least one selected from carbon black and inorganic filler. The rubber composition of the present disclosure most preferably contains carbon black. The filler is blended into the rubber composition so that reinforcing property and the like of the rubber composition improve.

Content of the filler to be blended, which is not particularly restricted and may be appropriately selected in accordance with applications, is preferably in the range of 10 to 100 parts by mass, more preferably in the range of 20 to 80 parts by mass, and most preferably in the range of 30 to 60 parts by mass, with respect to 100 parts by mass of the rubber component.
The content of the filler ≥ 10 parts by mass ensures satisfactory demonstration of an effect caused by the filler (such as improvement of durability) and the content of the filler ≤ 100 parts by mass ensures satisfactory dispersion of the filler in the rubber component, thereby reliably improving performances of the rubber composition.
In this respect, setting the content of the filler to be within the preferable range or the most preferable range described above is advantageous in terms of achieving satisfactory workability, low hysteresis loss property and durability of the rubber composition in a well-balanced manner.

Type of the inorganic filler is not particularly restricted and may be appropriately selected in accordance with applications. Examples of the inorganic filler include silica, aluminum hydroxide, clay, alumina, talc, mica, kaolin, glass balloon, glass beads, calcium carbonate, magnesium carbonate, magnesium hydroxide, magnesium oxide, titanium oxide, potassium titanate, barium sulfide, and the like. These examples of the inorganic filler may be used by either a single type solely or two or more types in combination.
In a case where the inorganic filler is used, silan coupling agent may optionally be used together.

Type of the crosslinking agent is not particularly restricted and may be appropriately selected in accordance with applications. Examples of the crosslinking agent include sulfur-based crosslinking agent, organic peroxide-based crosslinking agent, inorganic crosslinking agent, polyamine-based crosslinking agent, resin crosslinking agent, sulfur compound-based cross-linking agent, oxime-nitrosoamine-based crosslinking agent, and the like. Among these examples, sulfur-based crosslinking agent is preferably applicable to a rubber composition for a tire.

Content of the crosslinking agent, which is not particularly restricted and may be appropriately selected in accordance with applications, is preferably in the range of 0.1 to 20 parts by mass with respect to 100 parts by mass of the rubber component. The content of the crosslinking agent of less than 0.1 parts by mass may result in insufficient crosslinking. The content of the crosslinking agent > 20 parts by mass may result in unwanted crosslinking by a portion of the crosslinking agent during mixing and knead and/or an adverse effect on physical properties of the resulting crosslinked product.

The rubber composition of the present disclosure may be used in combination with vulcanization accelerator as one of the other components. Examples of the vulcanization accelerator which can be used include guanidiene-based, aldehyde-amine-based, aldehyde-ammonium-based, thiazole-based, sulfenamide-based, thiourea-based, thiuram-based, dithiocarbamate-based, xanthate-based compounds.
Further, the rubber composition may optionally be blended with softening agent, vulcanization auxiliary, coloring agent, flame retardant, lubricant, antioxidant, ageing inhibitor, scorch-preventing agent, or other additives in accordance with applications.

The present disclosure includes use of a crosslinked rubber composition obtained by crosslinking the aforementioned rubber composition. Type of the crosslinked rubber composition is not particularly restricted and may be appropriately selected according to applications as long as the crosslinked rubber compositiont is obtained by crosslinking the rubber composition of the present disclosure.
Although conditions of the crosslinking are not particularly restricted and may be appropriately selected according to applications, temperature is preferably in the range of 120 °C to 200 °C and heating time is preferably in the range of 1 minute to 900 minutes.

### < Rubber product >

A rubber product of the present disclosure is characterized in that it uses the rubber composition of the present disclosure.
The rubber product thus obtained has excellently high durability (high wear resistance, high fracture resistance, high cracking resistance, and the like).
In respect of type of the rubber product, examples thereof include tire, vibration damper rubber, base-isolation rubber, belt (conveyer belt), rubber crawler, various types of hoses, and the like. The rubber product is preferably a tire, among these examples, because high durability is critically beneficial thereto.

When the rubber composition is used for a tire, type of a portion to which the rubber composition is applicable is not particularly restricted and may be appropriately selected in accordance with applications. Examples of the tire portion to which the rubber composition is applicable include rubber members such as tread, base tread, sidewalls, side reinforcing rubber, bead filler, and the like.
Applying the rubber composition to a tread, among these examples, is advantageous in terms of high durability required therein.
A conventionally known method can be employed as a method for manufacturing the aforementioned tire. For example, a tire as desired (e.g. a pneumatic tire) can be manufactured by: sequentially placing members generally used in manufacturing a tire, such as a carcass layer constituted of unvulcanized rubber and/or cords, a belt layer, a tread layer and the like, on a drum for tire-building process; removing the drum, thereby obtaining a green tire; and subjecting the green tire to heating and vulcanization according to the conventional method.

### EXAMPLES

The present disclosure will be described further in detail by Examples hereinafter. These Examples do not limit the present disclosure by any means.

### (Example 1)

A monomer solution was prepared by adding 300 mL of hexane solution containing 30 g of 1,3-butadiene in a nitrogen-substituted, completely dry pressure-resistant glass reactor (1000 mL). On the other hand, a catalyst solution was prepared by: mixing 9.9 µmol of Tris[N,N-Bis(trimethylsilyl)amide]gadolinium(III) (Gd[N(SiMe₃)₂]₃), 19.8 µmol of 1-benzylindene, 0.82 mmol of TIBAL (triisobutylaluminum), and 0.33 mmol of DIBAL (hydrogenated diisobutylaluminum) in a glass vessel in a glove box under a nitrogen atmosphere and leaving the mixture therein for 12 hours; then adding 0.06 mL of MMAO-3A (manufactured by Tosoh Finechem Corporation) and 4.95 mmol of N,N-dimethylanilinium tetrakis(pentafluorophenyl)borate (Me₂NHPhB(C₆F₅)₄) to the mixture and leaving the solution for 6 hours; thereafter adding 20 µL of DEAC (diethylaluminum chloride) to the solution, thereby obtaining a catalyst solution.
Next, a sample polymer was prepared by: collecting the catalyst solution from the glove box; adding an amount of the catalyst solution, equivalent to 9 µmol in terms of gadolinium, to the monomer solution, to carry out polymerization at 50 °C for 60 minutes; after the polymerization, adding 4,4'-diethylaminobenzophenone by an amount equivalent to the total amount of the alkylaluminum thus added × 1.5 to the mixture and allowing a modification reaction to proceed for 1 hour; then adding 1 mL of isopropanol solution containing 5 mass % of 2,2'-methylene-bis(4-ethyl-6-t-butylphenol) to the mixture to terminate the reaction; separating polymer by adding a large amount of IPA (isopropyl alcohol) and vacuum-drying the polymer thus separated at 60 °C, thereby obtaining a terminal-modified polymer (terminal-modified polymer A). The yield of the terminal-modified polymer A thus obtained was 30 g.

### Example 2

Example 2 was conducted by carrying out a polymerization reaction, a modification reaction and other processes thereafter in the same manner as Example 1, except that 2-cyanopyridine was used instead of 4,4'-diethylaminobenzophenone of Example 1 in Example 2. A terminal-modified polymer (terminal-modified polymer B) was obtained. The yield of the polymer B thus obtained was 30 g.

### Example 3

Example 3 was conducted by carrying out a polymerization reaction, a modification reaction and other processes thereafter in the same manner as Example 1, except that acrylonitrile was used instead of 4,4'-diethylaminobenzophenone of Example 1 in Example 3. A terminal-modified polymer (terminal-modified polymer C) was obtained. The yield of the polymer C thus obtained was 30 g.

### Example 4

Example 4 was conducted by carrying out a polymerization reaction, a modification reaction and other processes thereafter in the same manner as Example 1, except that 3-glycidoxypropyltrimethoxysilane was used instead of 4,4'-diethylaminobenzophenone of Example 1 in Example 4. A terminal-modified polymer (terminal-modified polymer D) was obtained. The yield of the polymer D thus obtained was 30 g.

### Example 5

Example 5 was conducted by carrying out a polymerization reaction, a modification reaction and other processes thereafter in the same manner as Example 1, except that allyl glycidyl ether was used instead of 4,4'-diethylaminobenzophenone of Example 1 in Example 5. A terminal-modified polymer (terminal-modified polymer E) was obtained. The yield of the polymer E thus obtained was 30 g.

### (Comparative Example 1)

A monomer solution was prepared by adding 300 mL of hexane solution containing 30 g of 1,3-butadiene in a nitrogen-substituted, completely dry pressure-resistant glass reactor (1000 mL). On the other hand, a catalyst solution was prepared by: mixing 9.9 µmol of Tris[N,N-Bis(trimethylsilyl)amide]neodymium (III) (Nd[N(SiMe₃)₂]₃), 19.8 µmol of 1-benzylindene, 0.82 mmol of triisobutylaluminum, and 0.33 mmol of hydrogenated diisobutylaluminum in a glass vessel in a glove box under a nitrogen atmosphere and leaving the mixture therein for 12 hours; then adding 0.06 mL of MMAO-3A (manufactured by Tosoh Finechem Corporation) and 4.95 mmol of N,N-dimethylanilinium tetrakis(pentafluorophenyl)borate (Me₂NHPhB(C₆F₅)₄) to the mixture and leaving the solution for 6 hours; thereafter adding 20 µL of diethylaluminum chloride to the solution, thereby obtaining a catalyst solution.
Next, a sample polymer was prepared by: collecting the catalyst solution from the glove box; adding an amount of the catalyst solution, equivalent to 9 µmol in terms of neodymium, to the monomer solution, to carry out polymerization at 50 °C for 60 minutes; after the polymerization, adding 4,4'-diethylaminobenzophenone by an amount equivalent to the total amount of the alkylaluminum thus added × 1.5 to the mixture and allowing a modification reaction to proceed for 1 hour; then adding 1 mL of isopropanol solution containing 5 mass % of 2,2'-methylene-bis(4-ethyl-6-t-butylphenol) to the mixture to terminate the reaction; separating polymer by adding a large amount of IPA and vacuum-drying the polymer thus separated at 60 °C, thereby obtaining a terminal-modified polymer (terminal-modified polymer F).
The yield of the terminal-modified polymer F thus obtained was 25 g.

### Comparative Example 2

Comparative Example 2 was conducted by carrying out a polymerization reaction, a modification reaction and other processes thereafter in the same manner as Comparative Example 1, except that 2-cyanopyridine was used instead of 4,4'-diethylaminobenzophenone of Comparative Example 1 in Comparative Example 2. A terminal-modified polymer (terminal-modified polymer G) was obtained. The yield of the polymer G thus obtained was 25 g.

### Comparative Example 3

Comparative Example 3 was conducted by carrying out a polymerization reaction, a modification reaction and other processes thereafter in the same manner as Comparative Example 1, except that acrylonitrile was used instead of 4,4'-diethylaminobenzophenone of Comparative Example 1 in Comparative Example 3. A terminal-modified polymer (terminal-modified polymer H) was obtained. The yield of the polymer H thus obtained was 25 g.

### Comparative Example 4

Comparative Example 4 was conducted by carrying out a polymerization reaction, a modification reaction and other processes thereafter in the same manner as Comparative Example 1, except that 3-glycidoxypropyltrimethoxysilane was used instead of 4,4'-diethylaminobenzophenone of Comparative Example 1 in Comparative Example 4. A terminal-modified polymer (terminal-modified polymer I) was obtained. The yield of the polymer I thus obtained was 25 g.

### Comparative Example 5

Comparative Example 5 was conducted by carrying out a polymerization reaction, a modification reaction and other processes thereafter in the same manner as Comparative Example 1, except that allyl glycidyl ether was used instead of 4,4'-diethylaminobenzophenone of Comparative Example 1 in Comparative Example 5. A terminal-modified polymer (terminal-modified polymer J) was obtained. The yield of the polymer J thus obtained was 25 g.

### (Comparative Example 6)

"BR01", polybutadiene rubber manufactured by JSR Corporation, was used as a conjugated diene polymer sample (polymer K) of Comparative Example 6.

### < Evaluations >

### (1) Evaluation of polymer

Terminal modification rate, content of the cis-1,4 bond, weight average molecular weight (Mw), and molecular weight distribution (MWD) were measured for each of the polymer samples obtained by Examples and Comparative Examples. The results are shown in Table 1.
Content of the cis-1,4 bond was calculated based on the integration ratios of peaks [¹H-NMR: δ4.6-4.8 (representing =CH₂ of the 3,4- vinyl unit), 5.0-5.2 (representing -CH= of the 1,4- unit), ¹³C-NMR: δ23.4 (representing 1,4-cis unit), 15.9 (representing 1,4-trans unit), 18.6 (representing 3,4- unit)] obtained by ¹H-NMR and ¹³C-NMR.
The weight average molecular weight (Mw) in terms of polystyrene (with monodispersed polystyrene as the reference) and the molecular weight distribution (MWD: Mw/Mn) of each polymer sample were obtained, respectively, by gel permeation chromatography [GPC: "HLC-8020GPC" manufactured by TOSOH CORPORATION, Column: (×2) "GMH-XL" manufactured by TOSOH CORPORATION, Detector: Differential refractometer (RI)].

**[Table 1]**

| | Example 1 | Example 2 | Example 3 | Example 4 | Example 5 | Comp. Example 1 | Comp. Example 2 | Comp. Example 3 | Comp. Example 4 | Comp. Example 5 | Comp. Example 6 |
|---|---|---|---|---|---|---|---|---|---|---|---|
| Type of polymer | Terminal-modified polymer A | Terminal-modified polymer B | Terminal-modified polymer C | Terminal-modified polymer D | Terminal-modified polymer E | Terminal-modified polymer F | Terminal-modified polymer G | Terminal-modified polymer H | Terminal-modified polymer I | Terminal-modified polymer J | Polymer K |
| Modifying agent | 4,4'-diethylaminobenzo phenone | 2-cyanop yridine | acrylonitrile | 3-glycidoxypropyltrimethoxysilane | allylglycidyl ether | 4,4'-diethylaminobenzo phenone | 2-cyanopyridine | acrylonitrile | 3-glycidoxypropyltrimethoxysilane | allyl glycidyl ether | - |
| Cotent of cis-1,4 linkage (%) | 95.3 | 95.3 | 95.2 | 95.3 | 95.3 | 94.5 | 94.5 | 94.3 | 94.5 | 94.4 | 95.0 |
| Number average molecular weight MW (× 10³) | 319 | 315 | 321 | 325 | 326 | 351 | 350 | 355 | 357 | 356 | 568 |
| Molecular weight distribution (Mw/Mn) | 1.65 | 1.58 | 1.63 | 1.69 | 1.70 | 2.42 | 2.42 | 2.46 | 2.48 | 2.50 | 3.30 |
| Modification rate (%) | 72 | 75 | 72 | 71 | 71 | 35 | 35 | 30 | 29 | 30 | - |

### (2) Evaluation of rubber composition

Rubber composition samples were prepared by using the terminal-modified polymer samples obtained by the respective Examples and Comparative Examples. Each of the rubber composition samples thus obtained was evaluated as follows.

### (a) Evaluation of low hysteresis loss property

Low hysteresis loss property was determined by: subjecting the rubber composition sample to vulcanization process at 160 °C for 20 minutes, to obtain sample rubber; and measuring loss tangent (tanδ) of the sample rubber by using a spectrometer manufactured by Toyo Seiki Seisaku-sho, Ltd. under the conditions of initial load: 100 g, strain: 2%, measurement frequency: 50 Hz, and measurement temperature: 25 °C and 60 °C.
The loss tangent (tanδ) value thus determined was then expressed by an index relative to the tanδ value of Comparative Example 6 being "100". The smaller index value represents the better results, i.e. the lower hysteresis loss. The results are shown in Table 2.

### (b) Fracture resistance

Fracture resistance was evaluated by: preparing a test tire by using the rubber composition sample as rubber for tread; measuring tensile strength of the ring-shaped rubber; and expressing the tensile strength value thus measured, by an index relative to the tensile strength value of Comparative Example 6 being "100". The larger index value represents the higher fracture resistance. The results are shown in Table 2.

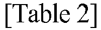

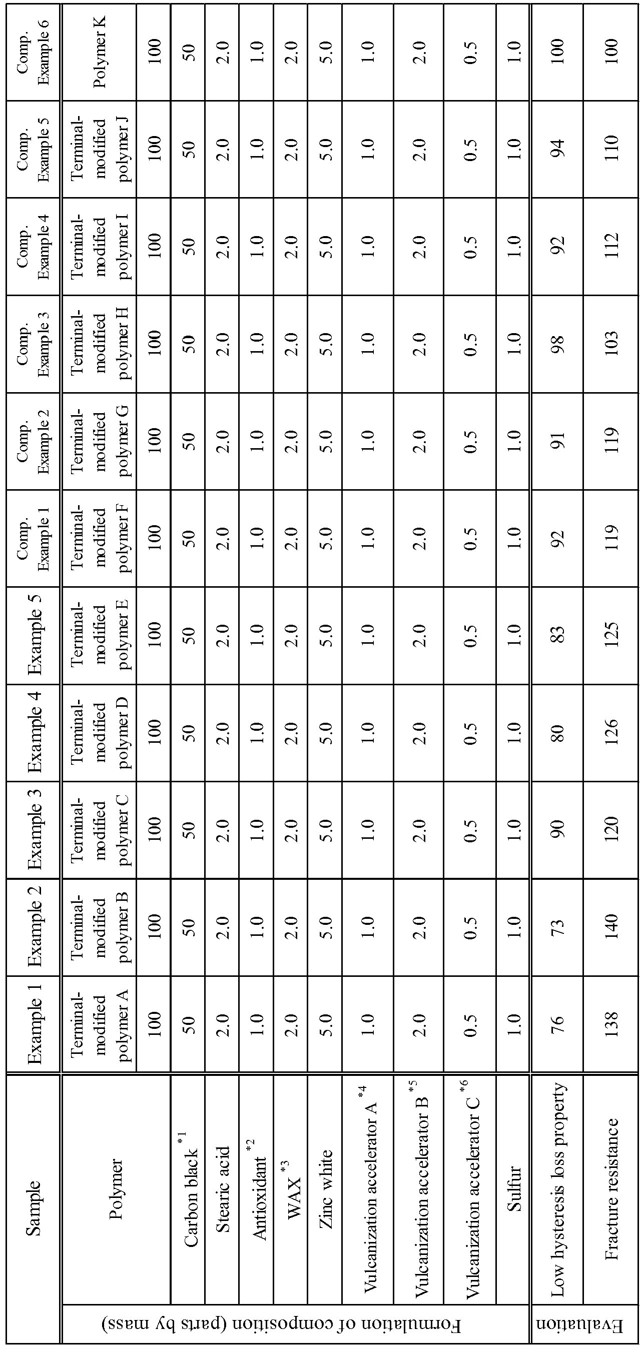

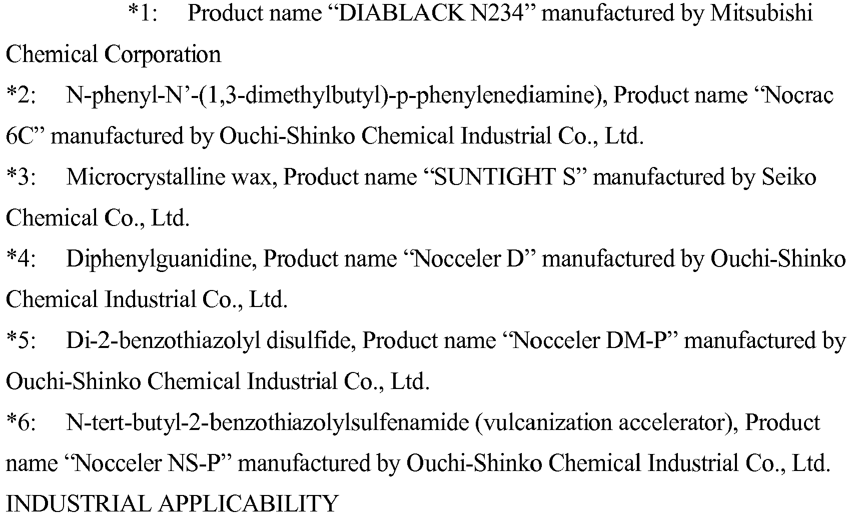

According to the present disclosure, it is possible to provide a terminal-modified conjugated diene polymer having a high cis-1,4 content and a low molecular weight distribution value and being excellent in durability (such as wear resistance, fracture resistance, cracking resistance, and the like), as well as a method for manufacturing the terminal-modified conjugated diene polymer. Further, according to the present disclosure, it is possible to provide a rubber composition and a rubber product, each of which has high durability, by using the terminal-modified conjugated diene polymer.

## Claims

1. A terminal-modified conjugated diene polymer, wherein it has: molecular weight distribution determined by gel permeation chromatography (GPC) of less than 2; and content of cis-1,4 bond of 95 % or more.

2. The terminal-modified conjugated diene polymer of claim 1, wherein the terminal-modified conjugated diene polymer has the molecular weight distribution of 1.7 or less.

3. The terminal-modified conjugated diene polymer of claim 1 or 2, wherein conjugated diene polymer constituting the terminal-modified conjugated diene polymer is polybutadiene or polyisoprene.

4. The terminal-modified conjugated diene polymer of claim 1, wherein the terminal-modified conjugated diene polymer is a reaction product of polymerization of a conjugated diene compound by using a polymerization catalyst composition and subsequent modification of a terminal of a polymer prepared by the polymerization, and
the polymerization catalyst composition contains: a rare earth element compound;
a coordinative compound having a cyclopentadiene skeleton selected from the group consisting of substituted/non-substituted cyclopentadiene, substituted/non-substituted indene, and substituted/non-substituted fluorene; an ionic compound constituted of a non-coordinating anion and a cation; and aluminoxane.

5. A rubber composition, including the terminal-modified conjugated diene polymer of any of claims 1 to 4.

6. A rubber product, using the rubber composition of claim 5.

7. A method for manufacturing the terminal-modified conjugated diene polymer of claim 1, wherein the method includes using a polymerization catalyst composition,
wherein the polymerization catalyst composition contains
Component (A): a rare earth element compound,
Component (D): a coordinative compound having a cyclopentadiene skeleton selected from the group consisting of substituted/non-substituted cyclopentadiene, substituted/non-substituted indene, and substituted/non-substituted fluorene, and
Component (B): an ionic compound (B-1) constituted of a non-coordinating anion and a cation and aluminoxane (B-2).
